# EUROPÄISCHE PATENTSCHRIFT

(11) **EP 1 525 700 B1**
(45) Veröffentlichungstag und Bekanntmachung des Hinweises auf die Patenterteilung: **20.09.2006**
(21) Anmeldenummer: 03787733.9
(22) Anmeldetag: 24.07.2003
(51) Int. Cl.: H04L 1/00, G10L 21/02, G10L 19/00

(54) **AUSWERTUNG VON EMPFANGENEN NUTZINFORMATIONEN DURCH FEHLERVERSCHLEIERUNGSDETEKTION**
EVALUATION OF RECEIVED USEFUL INFORMATION BY THE DETECTION OF ERROR CONCEALMENT
EVALUATION DE DONNEES UTILES RE UES PAR LA DETECTION DE MASQUAGES D'ERREURS

(30) Priorität: 02.08.2002 WO PCT/EP02/08652; 04.09.2002 DE 10240902
(43) Veröffentlichungstag der Anmeldung: 27.04.2005
(73) Patentinhaber: BenQ Mobile GmbH & Co. OHG, 81667 München (DE)
(72) Erfinder: MARKE, Matthias, 82194 Gröbenzell (DE); XU, Wen, 82008 Unterhaching (DE)
(74) Vertreter: Epping - Hermann - Fischer
(86) Internationale Anmeldenummer: PCT/DE2003/002498
(87) Internationale Veröffentlichungsnummer: WO 2004/017553

(56) Entgegenhaltungen:
- WO-A-98/48531
- US-A- 5 699 405
- DORBECKER M ET AL: "The cellular text telephone modem - the solution for supporting text telephone functionality in GSM networks" 2001 IEEE INTERNATIONAL CONFERENCE ON ACOUSTICS, SPEECH, AND SIGNAL PROCESSING. PROCEEDINGS (CAT. NO.01CH37221), 2001 IEEE INTERNATIONAL CONFERENCE ON ACOUSTICS, SPEECH, AND SIGNAL PROCESSING. PROCEEDINGS, SALT LAKE CITY, UT, USA, 7-11 MAY 2001, Seiten 1441-1444 vol.3, XP002261951 2001, Piscataway, NJ, USA, IEEE, USA ISBN: 0-7803-7041-4

## Beschreibung

Die Erfindung betrifft ein Verfahren und eine Vorrichtung zum Auswerten von über ein Kommunikationsnetz empfangenen, Nutzinformationen enthaltenden Daten.

Bei der digitalen Übertragung von Sprache über fehlerbehaftete Kanäle werden Quellencodierungsverfahren verwendet, um die benötigte Übertragungsbandbreite zu minimieren. Ein Kanalcode schützt die komprimierten Daten vor Übertragungsfehlern. Kann der Kanal-Decoder Fehler bei der Übertragung erkennen (z.B. Paritätsprüfung, CRC) und dem Quellen-Decoder die Fehlerhaftigkeit der Daten melden, so kann der Quellen-Decoder Fehlerverschleierungsmechanismen (Error Concealment) verwenden, um die Sprachqualität der empfangenen Daten zu verbessern. Wird der Sprachkanal aber verwendet, um modulierte Nutzinformationen, wie zum Beispiel Text bei Texttelephonie = CTM (Cellular Text telephone Modem), Dokumente, Graphik, Multimediadaten, etc. zu übertragen, ist diese Fehlerverschleierung nicht mehr günstig für die Übertragung dieser Nutzinformationen. Eine Nutzinformation ist die Information, die senderseitig in den Strom der Daten eingefügt wird und empfangsseitig wieder aus den Daten gewonnen wird, wie zum Beispiel Text, Sprach-, Bild-, Videosignale, etc.. Die Daten sind dabei die empfangenen Signale, die in einer für die Übertragung typischen Weise codiert sind. Bei der Übertragung von Text nach dem US-amerikanischen Texttelephoniestandard (vgl. 3GPP TS 26.226) durch digitale Codierung eines Alphabets, Kanalcodierung und frequenzmodulierte Übertragung über einen Sprachkanal, kann es vorkommen, dass ein Abschnitt dieses Sprachkanals über einen Mobilfunkkanal verläuft. Um die sichere Übertragung von Notrufen zu garantieren sind maximale Fehlerraten bei der Übertragung der einzelnen Buchstaben vorgeschrieben (vgl. 3GPP TS 26.231). Wird in diesem Mobilfunkkanal der Adaptive Multi-Rate (AMR) Sprachcodec verwendet, so wird bei der Erkennung eines fehlerhaft empfangenen Sprachrahmens eine Fehlerverschleierung verwendet. Dabei werden Parameter des letzten gut empfangenen Sprachrahmens verwendet. Zudem werden Parameter der vier 5 ms langen Unterrahmen des zuletzt gesendeten 20 ms langen AMR Rahmens gemittelt. Für den Demodulator des Texttelephoniesystems bedeutet das, dass zum Zeitpunkt t an Stelle eines sehr verrauschten Signals, das schlechte Zuverlässigkeitsinformation im Demodulator erzeugen würde und somit bei der Kanaldecodierung nicht so stark berücksichtigt werden würde, ein Signal aus der Vergangenheit demoduliert wird, das eigentlich nicht mehr gültige Information enthält aber dafür mit wenig Rauschen empfangen wird. Für dieses Signal werden somit trotz falscher Information hohe Zuverlässigkeitswerte, die angeben, dass das Signal zuverlässig decodiert werden konnte, obwohl das hier bei Text nicht stimmt, generiert. Die Folge sind hohe Fehlerraten nach der Kanaldekodierung, die nicht aus den Zuverlässigkeitsinformationen ersichtlich sind.

Die WO 98/48531 beschreibt ein Verfahren zum Verschleiern von Fehlern in einem Audiodatenstrom. In dem Audiodatenstrom wird das Auftreten eines Fehlers erfasst, wobei Audiodaten vor Auftreten des Fehlers intakte Audiodaten sind. Anschließend wird eine spektrale Energie einer Untergruppe der intakten Audiodaten berechnet. Nach dem Bilden einer Vorlage für Ersatzdaten aufgrund der für die Untergruppe der intakten Audiodaten berechneten spektralen Energie werden Ersatzdaten für fehlerhafte oder nicht vorhandene Audiodaten, die der Untergruppe entsprechen, aufgrund der Vorlage erzeugt.

Dorbecker M et al ("The cellular text telephone modem - the solution for supporting text telephone functionality in GSM networks" 2001 IEEE International Conference on Acoustics, Speech, and Signal Processing. Proceedings (CAT. NO. 01CH37221), 2001 IEEE International Conference on Acoustics, Speech, and Signal Processing. Proceedings, Salt Lake City, UT, USA, 7-11 May 2001, Seiten 1441-1444 vol. 3, XP002261951 2001, Piscataway, NJ, USA, IEEE, USA, ISBN: 0-7803-7041-4) zeigt auf, dass Texttelephonie-Geräte text-basierte Eingabegeräte sind, die es Nutzern ermöglichen mittels Text über ein Festnetz zu kommunizieren. Für den nordamerikanischen Mobilfunkstandard PCS-1900 wird eine Möglichkeit zur Nutzung der CTM-Signale vorgeschlagen. Dabei ist diese Möglichkeit unabhängig vom verwendeten Mobilfunknetz und funktioniert bei allen Sprach-Kanälen.

Aufgabe der Erfindung ist es, ein Verfahren und eine Vorrichtung in einem zellularen mobilen Kommunikationsnetz zum empfangsseitigen Erkennen unzuverlässig detektierbarer empfangener Nutzinformationen vorzuschlagen.

Die Aufgabe wird erfindungsgemäß durch die Gegenstände der unabhängigen Patentansprüche bezüglich des Verfahrens und der Vorrichtung gelöst. Kern der Erfindung ist ein Verfahren zum empfangsseitigen Erkennung einer Fehlerverschleierung z. B. eines die empfangenen Daten dekodierenden Sprachdecoders, anhand der aus den Empfangsdaten gewonnenen statistischen Parameter. Diese kann im Allgemeinen für die Übertragung von Nutzinformationen, wie Sprach-, Bild-, Videosignalen, etc., verwendet werden, bei welcher empfangsseitig Fehlerverschleierung eingesetzt wird. Bei einem CTM Gerät werden Zuverlässigkeitsinformationen (Softwerte) entsprechend der Fehlerverschleierung (vorliegend oder nicht vorliegend) unterschiedlich behandelt bzw. gewichtet. Bei der AMR Sprachübertragung in einem mobilen Kommunikationsnetz kann mit Hilfe der Erfindung der AMR Modus umgeschaltet werden, um die Fehlerverschleierung zu minimieren. Bei anderen Anwendungen zur Datenübertragung kann dieses Verfahren hinsichtlich der Qualität der übertragenen Daten zur Entscheidungsfindung, ob Daten nochmals übertragen werden sollen, verwendet werden. Ein wesentlicher Vorteil dieses Verfahrens ist, dass keine explizite Information eines Empfängers über die Verwendung von Fehlerverschleierung nötig ist, somit ist es für Zubehör ebenfalls geeignet. Setzt man dieses Verfahren bei externen CTM (Cellular Text telephone Modem)-Zusatzgeräten ein, so funktioniert das CTM Gerät ohne Anpassung mit verschiedenen Mobilfunkendgerät-Fabrikaten. Mit Hilfe der Erfindung kann zuverlässig entschieden werden, ob die empfangenen Nutzinformationen durch eine Fehlerverschleierung verfälscht wurden. Ferner können die Fehlerraten bei der Übertragung minimiert werden, was gerade bei Notrufen einen großen Vorteil darstellt. Weiterbildungen der Erfindung sind in den Unteransprüchen angegeben.

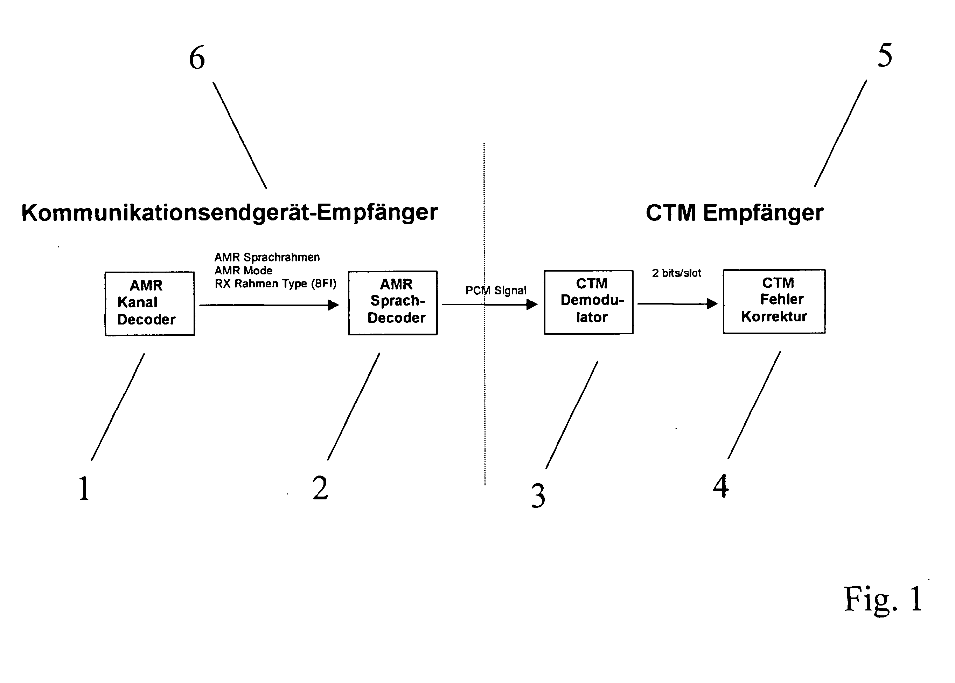

Die Erfindung wird anhand eines in der Figur dargestellten Ausführungsbeispiels näher erläutert. Dabei zeigt
- Figur 1: eine vereinfachte Darstellung der statistischen Analyse von Daten zur Detektion des Einsatzes von Fehlerverschleierung bei einer erfolgten Sprachdecodierung der Daten

Figur 1 zeigt, wie ein AMR Kanal Decoder in einem AMR Empfänger (6) von einem Entzerrer die übertragenen Daten in Form von TDMA-Bursts erhält. Der AMR Kanal Decoder (1) korrigiert so weit möglich Kanalfehler. Anhand einer Prüfsumme (CRC) erkennt er (1), ob der kanaldecodierte AMR Sprachrahmen brauchbar oder unbrauchbar (im Sinne von zu stark durch die Übertragung gestört) ist. Er übergibt an den AMR Sprach Decoder (2) den decodierten Sprachrahmen, den AMR Modus und die Zusatzinformation, ob der Rahmen brauchbar ist. Letztere Information ist im Parameter RX_FRAME_TYPE enthalten (BFI = Bad Frame Indikator). Der AMR Sprach Decoder (2) nutzt den BFI (Bad Frame Indikator), um unbrauchbare Rahmen nicht direkt in Sprache (Audio-Signal) umzusetzen, sondern die Nutzinformationen enthaltenden Daten in diesem Falle aus Rahmen aus der Vergangenheit so zu synthetisieren, dass das menschliche Ohr nur eine minimale Störung wahrnimmt (Fehlerverschleierung). Am Ausgang des Moduls (2) liegt ein PCM (Puls Code Modulation) Signal an.

Das quellendecodierte Audiosignal wird auf charakteristische Merkmale der Fehlerverschleierung hin untersucht, die mit einer ausreichend hohen Wahrscheinlichkeit auf die Anwendung einer Fehlerverschleierung bei der Dekodierung im untersuchten Zeitfenster schließen lassen. Die so gewonnene Aussage, ob wahrscheinlich Fehlerverschleierung vorliegt, geht in eine die Zuverlässigkeit richtiger Demodulation der Nutzinformationen angebende Zuverlässigkeitsinformation, die der Demodulator (3) der Nutzinformationen enthaltenden Daten liefert, ein: Falls es wahrscheinlich ist, dass für Nutzinformationen Fehlerverschleierung im Demodulationszeitfenster verwendet wurde sinkt die Zuverlässigkeit (= Wahrscheinlichkeit), dass die Nutzinformationen zutreffend (= richtig) dekodiert wurden, also den gesendeten Nutzinformationen entsprechen. Die Zuverlässigkeitsinformationen werden also auf einen niedrigereren Wert festgelegt als wenn keine Anwendung einer Fehlerverschleierung detektiert worden wäre. Eine folgende Kanaldecodierung der Nutzinformationen enthaltenden Daten kann mit dieser Zuverlässigkeitsinformation Fehler besser feststellen und korrigieren. Nutzinformationen können z. B. aus Zahlen, Buchstaben oder Zahlen und Buchstaben bestehen. Der CTM Empfänger (5) besteht u.a. aus einer Demodulator-Einheit (3) und dem Fehlerkorrektur-Modul (4). In ersterem werden aus 40 PCM-Signalwerten zwei Bits generiert, die frequenzmoduliert im PCM-Signal enthalten sind. Den Bits wird eine Zuverlässigkeitsinformation beigefügt. Die Zuverlässigkeitsinformation ist fälschlicherweise hoch, wenn die 40 Signalwerte aus einem AMR Rahmen entstammen, der eigentlich unbrauchbar empfangen wurde. Durch die Fehlerverschleierung besitzt das Signal wenige akustische Störanteile, hat aber die frequenzmodulierte Information einem Sprachrahmen der Vergangenheit entnommen und ist deshalb zum aktuellen Zeitpunkt nicht verwertbar.

Es ist dem PCM-Signal nicht mehr unmittelbar zu entnehmen, ob eine Fehlerverschleierung angewendet wurde. Beim CTM Empfänger (5) werden pro 5ms 2 Bit frequenzmoduliert (4 Frequenzen) übertragen. Mit einem Korrelationsdemodulator (3) wird die Frequenz ermittelt, die am wahrscheinlichsten gesendet wurde. Ein CTM (Cellular Text telephone Modem) ist ein Modem das die Übertragung von Textnachrichten über Sprachkanäle in Mobilfunksystemen ermöglicht. Unabhängig vom Sprachkanal (Fullrate Speech, Halfrate Speech, Enhanced Fullrate Speech, AMR, zukünftige Technologien) können Informationen von Gehör- oder Sprachbehinderten übertragen werden, indem Buchstaben codiert und frequenzmoduliert im Sprachfrequenzband übertragen werden.

Im Gegensatz zu anderen Texttelephonie-Standards, die für Festnetze ausgelegt sind, ist CTM mit robustem Fehlerschutz für mobile Übertragung entwickelt. Das CTM ist entweder ein externes Zusatzgerät für Mobiltelefone oder es ist als DSP Code in Firmware implementiert im Mobiltelefon integriert.

Diese Information sowie die Angaben betreffend die Zuverlässigkeit werden an den Kanal-Decoder des CTM Systems übermittelt. Zudem kann die Signalenergie gemessen werden. 5ms entspricht einem Viertel eines AMR Rahmens von 20 ms. Bei Fehlerverschleierung im AMR Empfänger (6) werden Parameter aus früheren, korrekt empfangenen Rahmen wiederholt, es wird also zum Zeitpunkt t ein Signal ausgegeben, das dem Signal zum Zeitpunkt t minus 20ms sehr ähnlich ist, aber niedrigere Signalenergie besitzt (die Verstärkungsfaktoren werden gedämpft). Der Vergleich der aktuell zum Zeitpunkt t detektierten Frequenz und der Signalenergie mit der detektierten Frequenz und Signalenergie zum Zeitpunkt t minus 20ms lässt also bei gleicher Frequenz und niedrigerer Signalenergie zum Zeitpunkt t mit gewisser Wahrscheinlichkeit auf Fehlerverschleierung schließen und die Zuverlässigkeitsinformation des CTM Demodulators (3) kann dahingehend geändert werden, dass sie eine niedrige Zuverlässigkeit angibt. Genauso kann verfahren werden, wenn in unmittelbar aufeinander folgenden 5ms Unterrahmen die gleiche Frequenz detektiert und gleichbleibende bis sinkende Signalenergie gemessen wird, da auch das ein Indiz für die Anwendung von Fehlerverschleierung bei der erfolgten Demodulation ist. Bei der AMR Fehlerverschleierung werden nämlich Parameter der Unterrahmen gemittelt und somit 4 Unterrahmen lang ähnliche Signale ausgegeben. Durch diese beiden Ansätze und eine optimal parametrisierte Dämpfung der Zuverlässigkeitsinformation kann die Fehlerrate bei der Buchstabenübertragung um ca. 20 Prozent gesenkt werden.

Durch die in der Erfindung beschriebenen statistischen Untersuchungen kann geschätzt werden, ob eine Fehlerverschleierung verwendet wurde. Die Zuverlässigkeitsinformation kann dann angepasst werden, damit kann für Text/(CTM) - Daten zutreffend angegeben werden, ob sie mit hoher oder niedriger Wahrscheinlichkeit (= mehr oder weniger zuverlässig) zutreffend demoduliert wurden, da dies von der Anwendung der (für Text/(CTM) - Daten ungeeigneten) Fehlerverschleierung bei der Demodulation abhängt. Die Daten bestehen aus den Nutzinformationen, beim CTM noch mit dem Header und sonstigen Informationen.

## Patentansprüche

1. Verfahren zum Auswerten von über ein Kommunikationsnetz empfangenen, Nutzinformationen enthaltenden Daten,
wobei ein Kanal Decoder (1) empfangene Daten auswertet und zumindest teilweise korrigiert und Daten mit Eigenschaften der Daten repräsentierenden Zusatzinformationen an einen Sprach-Decoder (2) weiterleitet,
wobei der Sprach-Decoder (2) die Daten dekodiert und erforderlichenfalls eine Fehlerverschleierung durchführt und die Daten an einen Texttelephonie-Empfänger (5) weiterleitet,
wobei ein Demodulator (3) im Texttelephonie-Empfänger (5) die erhaltenen Daten auswertet und statistisch durch Messung der Signalenergie analysiert, eine Zuverlässigkeitsinformation betreffend die Daten erstellt und die Daten mit der Zuverlässigkeitsinformation an ein Fehler-Korrektur-Modul (4) weiterleitet und
wobei das Fehler-Korrektur-Modul (4) die erhaltenen Daten unter Berücksichtigung der Zuverlässigkeitsinformation korrigiert.

2. Verfahren nach Anspruch 1,
**dadurch gekennzeichnet,**
**dass** die Wahrscheinlichkeit einer zutreffenden Dekodierung der empfangenen Daten repräsentierende Zuverlässigkeitsinformationen in Abhängigkeit vom Ergebnis der Detektion einer Fehlerverschleierung bestimmt werden.

3. Verfahren nach Anspruch 2,
**dadurch gekennzeichnet,**
**dass** ein Kanal Decoder (1) die Zuverlässigkeitsinformation beim Kanaldekodieren berücksichtigt.

4. Verfahren nach einem der vorhergehenden Ansprüche,
**dadurch gekennzeichnet,**
**dass** die Daten Notruf-bezogene Daten sind.

5. Verfahren nach einem der vorhergehenden Ansprüche,
**dadurch gekennzeichnet,**
**dass** die Analyse der Daten in einer Mobilstation erfolgt.

6. Verfahren nach einem der vorhergehenden Ansprüche,
**dadurch gekennzeichnet,**
**dass** die Übertragung der Daten über ein zellulares mobiles Kommunikationsnetz erfolgt.

7. Verfahren nach einem der vorhergehenden Ansprüche,
**dadurch gekennzeichnet,**
**dass** die Analyse der Daten in einem Texttelephonie-Empfänger (5) erfolgt.

8. Verfahren nach einem der vorhergehenden Ansprüche,
**dadurch gekennzeichnet,**
**dass** für das statistische Erkennen einer Fehlerverschleierung vom Sprach Decoder (2) die Zeitabschnitte der Rahmen der empfangenen Nutzinformationen analysiert werden.

9. Verfahren nach Anspruch 8,
**dadurch gekennzeichnet,**
**dass** die Analyse der Zeitabschnitte in einem Texttelephonie-Demodulator (3) geschieht.

10. Verfahren nach einem der vorhergehenden Ansprüche,
**dadurch gekennzeichnet,**
**dass** das Ergebnis der statistischen Analyse an ein Fehler-Korrektur-Modul (4) im Texttelephonie-Empfänger (5) weitergeleitet wird.

11. Verfahren nach einem der vorhergehenden Ansprüche,
**dadurch gekennzeichnet,**
**dass** die Daten mit Adaptive Multi-Rate kodiert sind.

12. Verfahren nach einem der vorhergehenden Ansprüche,
**dadurch gekennzeichnet,**
**dass** die Nutzinformation aus Text, Sprach-, Bild-, und/oder Videosignale besteht.

13. Vorrichtung zum Auswerten von über ein Kommunikationsnetz empfangenen, Nutzinformationen enthaltenden Daten,
- mit einem Kanal Decoder (1) in einem Kommunikationsendgerät-Empfänger (6) zum Auswerten und zumindest teilweise Korrigieren der empfangenen Daten und zum Weiterleiten dieser Daten mit Eigenschaften der Daten repräsentierenden Zusatzinformationen an einen Sprach-Decoder (2),
- mit einem Sprach-Decoder (2) zur Dekodierung und erforderlichenfalls Fehlerverschleierung und zur Weiterleitung der Daten an einen Texttelephonie-Empfänger (5),
- mit einem Demodulator (3) im Texttelephonie-Empfänger (5) zum Auswerten und statistischen Analysieren der erhaltenen Daten durch Messung der Signalenergie, zum Erstellen einer Zuverlässigkeitsinformation betreffend die Daten und zum Weiterleiten von Daten mit der Zuverlässigkeitsinformation an ein Fehler-Korrektur-Modul (4),
- mit einem Fehler-Korrektur-Modul (4) zum Korrigieren der erhaltenen Daten unter Berücksichtigung der Zuverlässigkeitsinformation.

## Claims

1. Method for evaluation of data containing useful information received via a communications network,
whereby a channel decoder (1) evaluates and at least partially corrects received data and forwards data with characteristics of the additional information representing data to a voice decoder (2),
whereby the voice decoder (2) decodes the data and, if necessary, carries out error concealment and forwards the data to a text telephony receiver (5),
whereby a demodulator (3) in the text telephony receiver (5) evaluates the received data and analyses it statistically by measuring the signal energy, produces reliability information relating to the data and forwards the data with the reliability information to an error correction module (4), and
whereby the error correction module (4) corrects the received data, taking account of the reliability information.

2. Method according to Claim 1,
**characterized in that**
the probability of an appropriate decoding of the reliability information representing the received data is defined depending on the result of the detection of error concealment.

3. Method according to Claim 2,
**characterized in that**
a channel decoder (1) takes account of the reliability information in the channel decoding.

4. Method according to one of the preceding claims,
**characterized in that**
the data are emergency-call-related data.

5. Method according to one of the preceding claims,
**characterized in that**
the data are analysed in a mobile station.

6. Method according to one of the preceding claims,
**characterized in that**
the data are transmitted via a cellular mobile communications network.

7. Method according to one of the preceding claims,
**characterized in that**
the data are analysed in a text telephony receiver (5).

8. Method according to one of the preceding claims,
**characterized in that**
the time segments of the frames of the received useful information are analysed for the statistical recognition of error concealment by the voice decoder (2).

9. Method according to Claim 8,
**characterized in that**
the time segments are analysed in a text telephony demodulator (3).

10. Method according to one of the preceding claims,
**characterized in that**
the result of the statistical analysis is forwarded to an error correction module (4) in the text telephony receiver (5).

11. Method according to one of the preceding claims,
**characterized in that**
the data are coded with Adaptive Multi-Rate.

12. Method according to one of the preceding claims,
**characterized in that**
the useful information comprises text, voice signals, image signals, and/or video signals.

13. Device for evaluating data containing useful information received via a communications network,
- with a channel decoder (1) in a communications terminal receiver (6) for evaluation and at least partial correction of the received data and for forwarding these data with the characteristics of the additional information representing data to a voice decoder (2),
- with a voice decoder (2) for decoding and, if necessary, error concealment, and for forwarding the data to a text telephony receiver (5),
- with a demodulator (3) in the text telephony receiver (5) for evaluation and statistical analysis of the received data by measuring the signal energy, for creating reliability information relating to the data and for forwarding data with the reliability information to an error correction module (4),
- with an error correction module (4) for correction of the received data, taking account of the reliability information.

## Revendications

1. Procédé d'évaluation de données reçues par l'intermédiaire d'un réseau de communication et contenant des informations utiles,
un décodeur de canal (1) évaluant des données reçues et les corrigeant tout du moins en partie et transmettant à un décodeur vocal (2) des données avec des caractéristiques des données représentant des informations supplémentaires,
le décodeur vocal (2) décodant les données et réalisant un masquage d'erreur en cas de besoin et transmettant les données à un récepteur de téléphonie textuelle (5),
un démodulateur (3) dans le récepteur de téléphonie textuelle (5) évaluant les données reçues et les analysant de manière statistique par mesure de l'énergie de signal, établissant une information de fiabilité concernant les données et transmettant à un module de correction d'erreurs (4) les données avec l'information de fiabilité, et
le module de correction d'erreurs (4) corrigeant les données reçues en tenant compte de l'information de fiabilité.

2. Procédé selon la revendication 1,
**caractérisé en ce**
**que** des informations de fiabilité, représentant la probabilité d'un décodage approprié des données reçues, sont déterminées en fonction du résultat de la détection d'un masquage d'erreurs.

3. Procédé selon la revendication 2,
**caractérisé en ce**
**qu'**un décodeur de canal (1) tient compte de l'information de fiabilité lors du décodage de canal.

4. Procédé selon l'une quelconque des revendications précédentes,
**caractérisé en ce**
**que** les données sont des données relatives à un appel d'urgence.

5. Procédé selon l'une quelconque des revendications précédentes,
**caractérisé en ce**
**que** l'analyse des données est réalisée dans une station mobile.

6. Procédé selon l'une quelconque des revendications précédentes,
**caractérisé en ce**
**que** la transmission des données est réalisée par l'intermédiaire d'un réseau de communication mobile cellulaire.

7. Procédé selon l'une quelconque des revendications précédentes,
**caractérisé en ce**
**que** l'analyse des données est réalisée dans un récepteur de téléphonie textuelle (5).

8. Procédé selon l'une quelconque des revendications précédentes,
**caractérisé en ce**
**que** pour l'identification statistique d'un masquage d'erreurs par le décodeur vocal (2), les intervalles de temps des trames des informations utiles reçues sont analysés.

9. Procédé selon la revendication 8,
**caractérisé en ce**
**que** l'analyse des intervalles de temps a lieu dans un démodulateur de téléphonie textuelle (3).

10. Procédé selon l'une quelconque des revendications précédentes,
**caractérisé en ce**
**que** le résultat de l'analyse statistique est transmise à un module de correction d'erreurs (4) dans le récepteur de téléphonie textuelle (5).

11. Procédé selon l'une quelconque des revendications précédentes,
**caractérisé en ce**
**que** les données sont codées avec Adaptative Multi-Rate.

12. Procédé selon l'une quelconque des revendications précédentes,
**caractérisé en ce**
**que** l'information utile est constituée de texte, de signaux vocaux, de signaux d'image et/ou de signaux vidéo.

13. Dispositif d'évaluation de données reçues par l'intermédiaire d'un réseau de communication et contenant des informations utiles,
- comprenant un décodeur de canal (1) dans un récepteur de terminal de communication (6) pour l'évaluation et au moins la correction partielle des données reçues et pour la transmission à un décodeur vocal (2) de ces données avec des caractéristiques des informations supplémentaires représentant les données,
- comprenant un décodeur vocal (2) pour le décodage et, en cas de besoin, le masquage d'erreurs et pour la transmission des données à un récepteur de téléphonie textuelle (5),
- comprenant un démodulateur (3) dans le récepteur de téléphonie textuelle (5) pour l'évaluation et l'analyse statistique des données reçues par mesure de l'énergie de signal, pour l'établissement d'une information de fiabilité concernant les données et pour la transmission à un module de correction d'erreurs (4) de données avec l'information de fiabilité,
- comprenant un module de correction d'erreurs (4) pour corriger les données reçues en tenant compte de l'information de fiabilité.
